# EUROPEAN PATENT SPECIFICATION

(11) **EP 0 349 347 B1**
(45) Date of publication and mention of the grant of the patent: **22.09.1993**
(21) Application number: 89306691.0
(22) Date of filing: 30.06.1989
(51) Int. Cl.: B23K 26/00

(54) **Optical marking system having marking mode selecting function**
Optisches Markierungssystem mit einer Auswahlfunktion für die Markierungsform
Système de marquage optique avec une fonction de sélection pour la forme de marquage

(30) Priority: 30.06.1988 JP 163973/88; 27.03.1989 JP 71940/89
(43) Date of publication of application: 03.01.1990
(73) Proprietor: KABUSHIKI KAISHA TOSHIBA, Kawasaki-shi, Kanagawa-ken 210 (JP)
(72) Inventor: Ito, Hiroshi, 1-1 Shibaura 1-chome Minato-ku Tokyo 105 (JP); Ishida, Shuichi, 1-1 Shibaura 1-chome Minato-ku Tokyo 105 (JP); Fujimori, Yasutomo, 1-1 Shibaura 1-chome Minato-ku Tokyo 105 (JP)
(74) Representative: Freed, Arthur Woolf

(56) References cited:
- EP-A- 0 110 231
- DE-A- 3 208 626
- DE-A- 3 314 963

## Description

This invention relates to laser optical apparatus and an optical marking method for illuminating a workpiece with a pattern in order to form a mark thereon.

Laser marking is essentially a technique of marking on a given product the name of the manufacturer and a serial number, by means of laser beam, so as to render the product readily identifiable.

There are two main methods of forming marks by laser marking. One method, used in the case of relatively complicated patterns, such as a company emblem or Chinese characters, is to raster-scan the mask of a pattern to be formed on an object or work by means of a laser beam, and then to project a light beam having a cross-section corresponding to the pattern onto the object surface. A related method for cutting paper to a pattern defined by a mask is disclosed in GB-A-2118884. The other method, used in the case of simple designs, such as serial numbers, is to scan a laser beam in a single stroke, without using a mask, and thus directly mark the object, as disclosed for example in EP-A-0110231. In DE-A-3208626, a similar laser patterning technique is disclosed, in which a series of dots are generated in a single stroke.

In the case of the marking technique using a mask, a desired pattern can be formed in advance on a mask by, for example, etching and thus a relatively complicated pattern can be marked easily and precisely. However, in the case where simple designs are intended to be marked, this method has a problem in that it requires changing masks every time a new pattern is intended to be marked. This renders the operation of the system undesirably complicated.

In the case of the technique of applying a laser beam directly to the object, a pattern can be marked by the laser beam being moved by CPU control in accordance with the pattern to be formed. However, the more complicated the pattern to be formed, the more complicated the movement of the light beam is likely to be, thus necessitating ever more complex programming for controlling the movement of the light beam.

Moreover, employing the direct beam application method has a limitation in that the shape of a pattern marked is defined by the spot shape of the laser beam as well as the spot diameter. In other words, if a laser beam having a large spot is used, the edge portion of the pattern marked may be rounded rather than sharply defined.

The invention mitigates the problems associated with conventional workpiece-illuminating systems by providing apparatus as defined in claim 1, and a corresponding method as defined in claim 14.

Three embodiments of the invention will now be described, by way of example only, with reference to the accompanying drawings, wherein:
Fig. 1 is a diagram showing an optical marking system according to a first embodiment of this invention;
Fig. 2 is a perspective view of a mask used in an optical marking system according to this invention;
Fig. 3 is a perspective view of an object which has been subjected to the marking process;
Fig. 4 is a diagram showing the dimensional relation between the mask and lenses;
Fig. 5 is a block diagram of a control circuit for controlling the optical marking system of Fig. 1;
Fig. 6 is a flowchart showing the sequence of operations for effecting two modes of the optical marking system of Fig. 1;
Fig. 7 is a block diagram for illustrating the schematic construction of the optical marking system according to the first embodiment of this invention;
Fig. 8 is a diagram showing an optical marking system according to a second embodiment of this invention;
Fig. 9 shows a case where mark "F" is made;
Fig. 10 is a diagram showing an optical marking system according to a third embodiment of this invention;
Fig. 11 is a block diagram of a control circuit for controlling the optical marking system of Figs. 8 and 10; and
Fig. 12 is a block diagram for illustrating the schematic construction of the optical marking system according to the second and third embodiments of this invention.

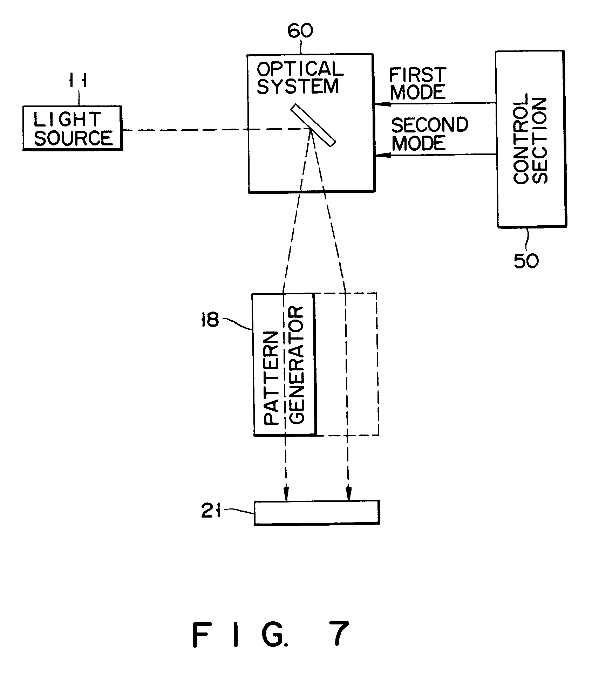

First, the schematic construction of an optical marking system according to a first embodiment of this invention is explained with reference to Fig. 7.

The optical marking system includes light source 11 for generating a light beam of a predetermined wavelength, optical system 60 for receiving the light beam generated by light source 11 and directing the received light beam in a preset direction, pattern generator 18 positioned in connection with optical system 60, and including a pattern forming section and a non-pattern forming section, and control section 50 connected to optical system 60, for controlling optical system 60 to effect a first mode in which the light beam is directed to the pattern forming section of pattern generator 18, to form a predetermined pattern, and a second mode, in which the light beam is directed to the non-pattern forming section of pattern generator 18, the first and second modes being effected in a preset sequence.

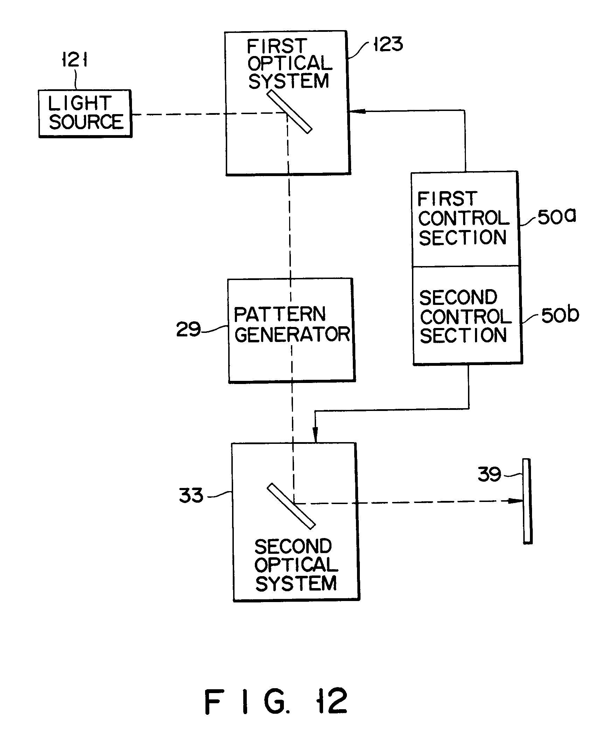

Further, the schematic construction of an optical marking system according to each of second and third embodiments of this invention is explained with reference to Fig. 12.

The optical marking system of this invention includes light source 121 for generating a light beam of a predetermined wavelength suitable for optically marking a work, first optical system 123 for receiving the light beam generated by light source 121 and directing the received light beam in a preset direction, pattern generator 29 positioned in connection with first optical system 123, and including a plurality of patterns of at least one kind and of different sizes, first control section 50a, connected to first optical system 123, for controlling first optical system 123 to select one of the plurality of patterns of pattern generator 29, second optical system 33, for receiving a light pattern corresponding to the pattern selected by means of first control section 50a and directing the light pattern to the work, and second control section 50b, connected to second optical system 33, for controlling second optical system 33 to mark the work according to the pattern selected by means of first control section 50a.

Now, the optical marking system according to the first embodiment of this invention is explained.

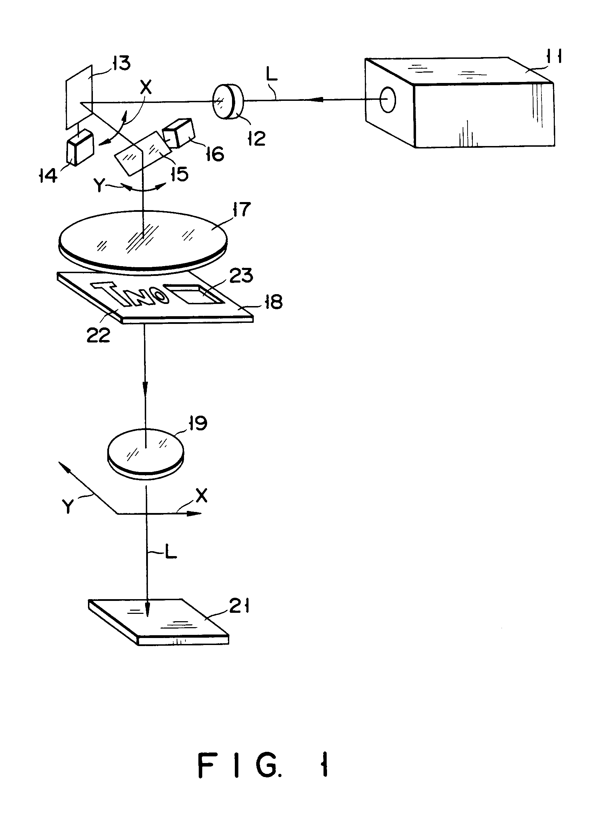

Fig. 1 is a diagram showing the optical marking system according to the first embodiment of this invention. The optical marking system includes laser oscillator 11 for generating a laser beam of a preset wavelength. Laser oscillator 11 uses a laser that generates a Q switching output of peak power. Laser beam L generated by laser oscillator 11 is passed through condenser lens 12 and directed to first mirror 13. First mirror 13 is driven to rotatively oscillate in a preset angle range by means of first galvanometer scanner 14. Laser beam L reflected by means of first mirror 13 is transmitted to second mirror 15. Second mirror 15 is driven to rotatively oscillate in a preset angle range by means of second galvanometer scanner 16. First and second galvanometer scanners 14 and 16 are arranged such that the rotation axes thereof are set perpendicular to each other. With this arrangement, incident laser beam L can be deflected in a direction of X axis by rotatively oscillating first mirror 13 by means of first galvanometer scanner 14, and at the same time, incident laser beam L can be deflected in a direction of Y axis by rotatively oscillating second mirror 15 by means of second galvanometer scanner 16.

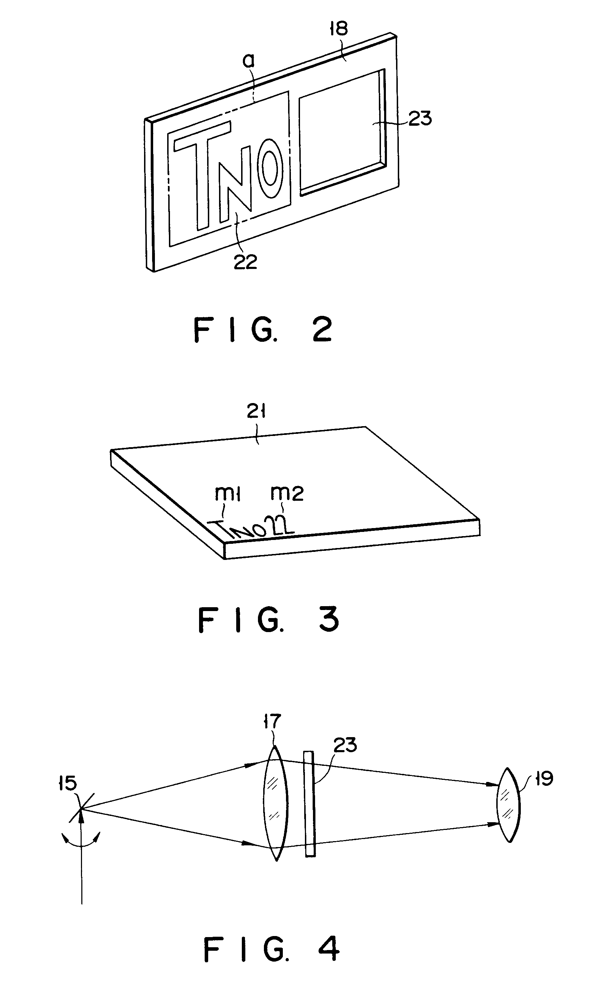

Laser beam L reflected by means of second mirror 15 is applied to object 21 via relay lens 17, rectangular mask 18 and image-forming lens 19. As shown in Fig. 2, a complicated pattern (for example, "T NO4") such as a company emblem is formed on the left portion of mask 18 and rectangular opening 23 is formed in the right portion thereof.

Relay lens 17 is formed sufficiently large so as to direct laser beam L to image-forming lens 19 after laser beam L reflected by second mirror 15 has passed through pattern section 22 or opening 23 of mask 18. This will be clearly understood from the fact that it is necessary to place relay lens 17 of at least the same size as mask 18 in front of mask 18 as shown in Fig. 4 in order to apply laser beam L to the entire portion of mask 18. Laser beam L directed to image-forming lens 19 via mask 18 by means of relay lens 17 is converged by means of image-forming lens 19 and then applied to object 21.

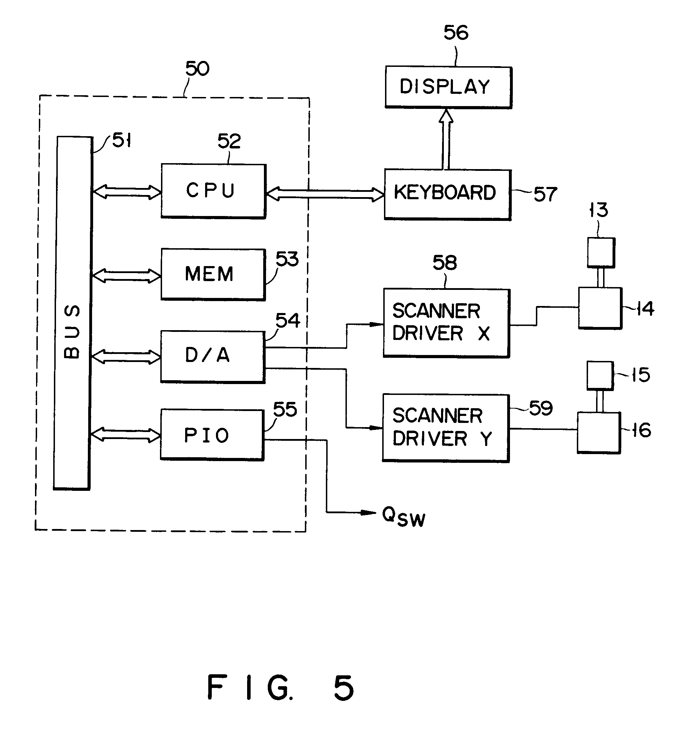

Now, the control circuit of the optical marking system according to the first embodiment of this invention is explained with reference to a block diagram of Fig. 5. The control circuit includes computer control section 50 which includes central processing unit (CPU) 52, memory (MEM) 53, digital-analog (D/A) converter 54, PIO 55 serving as an interface for the Q switching and bus 51 serving as a path for data transfer between the above circuits.

For example, one of the first mode (raster scan mode) and the second mode (character mode) described before is selected by reading out a preset program stored in memory 53. Then, CPU 52 supplies a preset digital signal corresponding to the selected mode to D/A converter 54 which in turn converts the input digital signal to an analog signal and supplies the analog signal to scanner drivers 58 and 59. Scanner drivers 58 and 59 respectively drive galvanometer scanners 14 and 16 so as to rotate first and second mirrors 13 and 15 by a preset angle. As a result, laser beam L generated by laser oscillator 11 is controlled so that laser beam L can be directed and applied to a desired portion of object 21. The adjustment of the marking position prior to the marking can be effected while observing the marking position displayed on display 56. Further, when the laser marking system becomes defective, the marking operation can be interrupted by supplying a preset signal from keyboard 57.

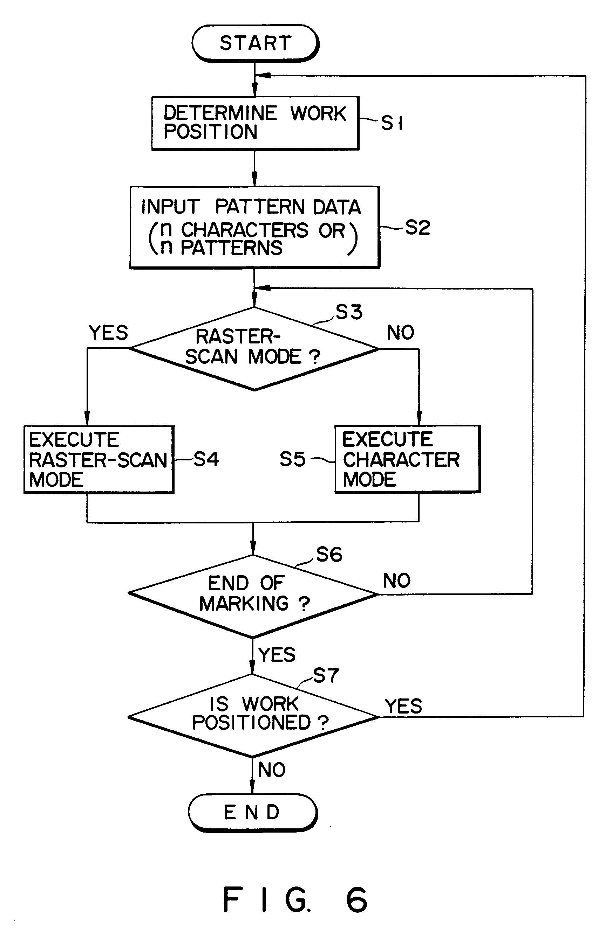

Now, the marking process for marking a combination of a complicated pattern made on the mask and a simple pattern which can be formed with a single stroke, for example, "T NO22" is explained with reference to the flowchart of Fig. 6. Mark "T NO" is an unchanged portion which is seldom changed for each marking process and the serial number "22" is frequently changed. As described before, in this invention, the raster-scan mode in which a pattern on the mask is formed and the character mode in which a pattern is formed with a single stroke are used.

First, in step 1, a work position is determined and the workpiece to be marked is set by a positioning apparatus, such as a handler. In step 2, data for the marking is input as codes into memory (MEM) 53. The codes represent characters to be formed or patterns such as trademarks, or the marking modes. For example, when the mark "T NO22" is intended to be formed on the workpiece, a code "R1" is used for forming "T NO" in the raster-scan mode, and two codes "C2C2" are used for forming the serial number "22" in the character mode. Therefore, the resulting codes for forming "T NO22" will be "R1C2C2". In step 3, it is judged whether the raster-scan mode or character mode in set. In this case, the raster-scan mode is selected and executed in step 4. When the raster-scan mode is effected, laser beam L generated by laser oscillator 11 is controlled by the rotation movement of first and second mirrors 13 and 15 so as to raster-scan the entire portion of pattern 22 (area a surrounded by chain lines) of mask 18. Laser beam L passes through only pattern 22 formed on mask 18 and is focused on object 21 by means of image-forming lens 19. In this way, mark m1 of "T NO" is formed on object 21. After this, it is judged in step 6 whether the marking process is completed or not. In this case, "NO" is selected and step 3 is repeated. In step 3, the character mode is selected this time and is excecuted in step 5.

When the character mode is effected, laser beam L generated by laser oscillator 11 is controlled by the rotation movement of first and second mirrors 13 and 15 so as to pass through opening 23 of mask 18 and draw the number "2" on object 21. To complete the marking of "22", the character mode is repeated. In step 7, it is judged whether another workpiece is positioned. When it is detected that another workpiece is positioned, step 1 is executed again to repeatedly effect the same operation. When it is detected that no workpiece is positioned, the marking operation is interrupted.

In this way, a combination of mark m1 of "T NO" and mark m2 of serial number "22" can be formed on the workpiece, as shown in Fig. 3.

As described above, in this invention, the marking operations for a complicated pattern which is seldom changed and a pattern which is frequently changed are separately effected in two different modes. Therefore, the operation of an optical marking system can be simplified.

Further, in the embodiment of this invention, the galvanometer scanner is used as a device for rotating the mirror, but the device is not limited thereto and may be constituted by a motor, for example. Also, it is possible to use a polygon mirror as the mirror. The opening is formed in the mask in the above embodiment, but a light transmission body may be formed instead of forming the opening. Further, it is also possible to use a mask having only the unchanged portion without forming the opening.

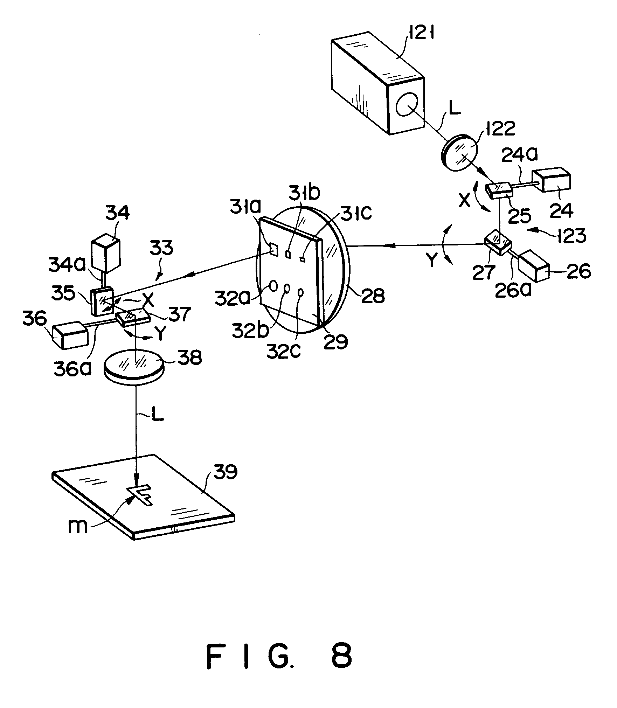

Now, an optical marking system according to the second embodiment of this invention is explained with reference to Fig. 8. The optical marking system shown in Fig. 8 includes laser oscillator 121. Laser oscillator 121 generates laser beam L having a circular cross section which passes first lens 122 and enters optical system 123 for freely setting the travelling direction of laser beam L. Optical system 123 includes first mirror 25 which is rotatively oscillated by means of first galvanometer scanner 24 and second mirror 27 which is rotatively oscillated by means of second galvanometer scanner 26. First and second galvanometer scanners 24 and 26 are arranged such that the rotation axes 24a and 26a thereof are set perpendicular to each other. With this arrangement, incident laser beam L can be deflected in an X direction by means of first mirror 25, and incident laser beam L can be deflected in a Y direction by means of second mirror 27. That is, laser beam L can be deflected in the X and Y directions by means of optical system 123.

Laser beam L from second mirror 27 of optical system 123 passes relay lens 28 and enters pattern mask 29. Pattern mask 29 has a plurality of rectangular light transmission patterns 31a, 31b, ... with different sizes and a plurality of circular light transmission patterns 32a, 32b, ... with different sizes formed as the transmission pattern through which laser beam L passes. With this arrangement, laser beam L can pass a selected one of the light transmission patterns by changing the travelling direction of laser beam L by means of optical system 123.

Laser beam L which has passed the selected light transmission pattern of pattern mask 29 enters scanning system 33. Scanning system 33 includes third mirror 35 which is rotatively oscillated by means of third galvanometer scanner 34 and fourth mirror 37 which is rotatively oscillated by means of fourth galvanometer scanner 36. First and second galvanometer scanners 34 and 36 are arranged such that the rotation axes 34a and 36a thereof are set perpendicular to each other. Further, third mirror 35 is disposed in position so that laser beam L having passed the selected light transmission pattern can enter third mirror 35. Therefore, laser beam L incident on third mirror 35 may be deflected in the X direction and laser beam L incident on fourth mirror 37 may be deflected in the Y direction.

Laser beam L from fourth mirror 37 of scanning system 33 is converged by means of second lens 38 and focused on work 39. That is, laser beam L applied to work 39 and having a cross section corresponding to a selected light transmission pattern of pattern mask 39 is scanned in the X and Y directions on work 39 by means of scanning system 33.

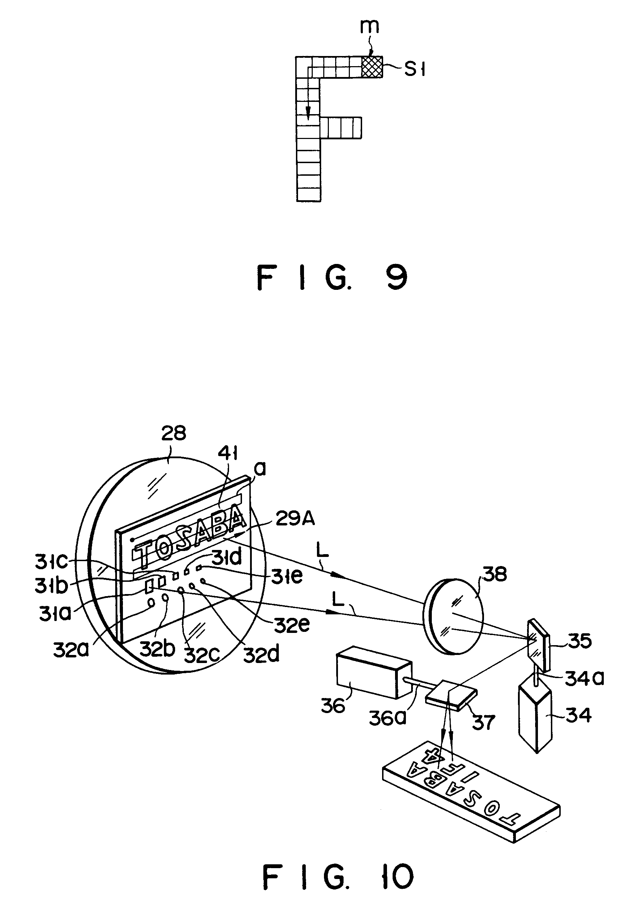

Now, assume a case where mark "F" shown in Fig. 9 is made by use of marking system of the above construction. In this case, the angles of first and second mirrors 25 and 27 in the X and Y directions are respectively set by means of first and second galvanometer scanners 24 and 26 so that laser beam L generated by laser oscillator 21 can pass rectangular light transmission pattern 31a having a dimension corresponding to the line width of mark "F".

After the angles of first and second mirrors 25 and 27 in the X and Y directions are set in this way, laser beam L is generated by laser oscillator 21 and at the same time laser beam L which has passed relay lens 28 and first light transmission pattern 31a is scanned by means of controlling the rotation movement of third and fourth mirrors 35 and 37 to draw mark "F" on work 39. Thus, mark "F" as shown in Fig. 9 can be formed on work 39.

According to the above marking process, when laser beam L has passed first rectangular light transmission pattern 31a of pattern mask 29, laser spot S1 having a rectangular cross section corresponding to first rectangular light transmission pattern 31a is emitted from first rectangular light transmission pattern 31a. As a result, mark "F" can be formed on work 39 without rounding the edge portion thereof. Further, laser beam L is directed to pass first rectangular light transmission pattern 31a which is one of a plurality of rectangular light transmission patterns 31a, 31b, 31c, ... and has a dimension corresponding to the line width of mark "F". Therefore, the entire portion of the line width of mark "F" can be made by directly using rectangular spot S1 emitted from first rectangular light transmission pattern 31a. In other words, it is not necessary to repeatedly scan spot S1 in order to mark the entire portion of the line width dark, and therefore the operational efficiency of the optical marking system can be improved.

In a case of the laser marking in which it is not necessary to make a sharp edge, that is, the laser marking for making a mark including a round edge portion, that one of circular light transmission patterns 32a, 32b, 32c, ... whose dimension corresponds to the line width of the mark is selected and then laser beam L is controlled by means of scanning system 33 to pass the selected circular light transmission pattern and is scanned.

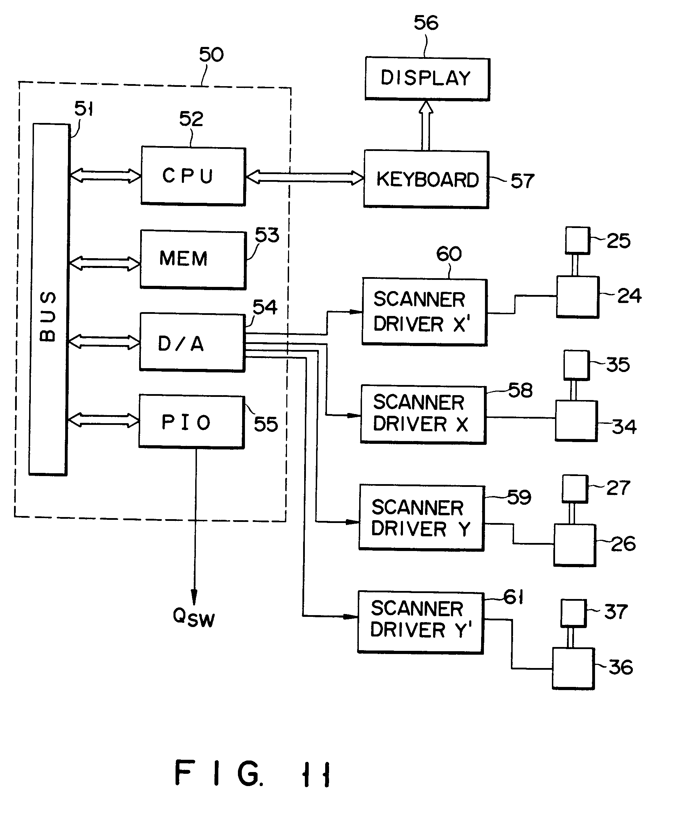

Fig. 10 shows an optical marking system according to a third embodiment of this invention. In this embodiment, third light transmission pattern 41 such as a company emblem or a mold number which is frequently used is formed on pattern mask 29A in addition to first rectangular light transmission patterns 31a, 31b, 31c, ... and second circular light transmission patterns 32a, 32b, 32c, ... Further, in this embodiment, second lens 28 is disposed on the incident side of third mirror 35 but can be disposed on the emission side of fourth mirror 37 in the same manner as in the second embodiment.

With pattern mask 29A of the above construction, the mark such as the company emblem which is frequently used can be efficiently and stably made by scanning laser beam L on the entire portion of third light transmission pattern 41 as shown by arrow a.

Further, in a case where a mark of a desired shape is made, one of first light transmission patterns having a desired dimension is selected in the same manner as in the second embodiment and then laser beam L is passed through the selected first light transmission pattern and is scanned in a single stroke by means of third and fourth mirrors 35 and 37 so as to make a mark having sharp edge portions.

In each of the above embodiments, a rectangular pattern is used as the first polygonal light transmission pattern, but another polygonal pattern such as a pentagonal or hexagonal pattern may be used depending on the shape of a mark to be made.

Further, in the second and third embodiments, a control circuit shown in Fig. 11 is used. As is clearly shown from Fig. 11, the control circuit is similar to that of the first embodiment except that two additional optical systems are used in the second and third embodiments.

As described above, a plurality of polygonal patterns of different sizes are formed in the pattern mask. Therefore, after the laser beam has passed the light transmission pattern, the laser beam will have a cross section of a corresponding polygonal shape. As a result, the edge portion can be marked sharply. A desired mark can be made with one scanning operation by selecting a light transmission pattern of a dimension corresponding to the line width of the mark, thus enhancing the operational efficiency of optical marking system.

## Claims

1. Optical apparatus for marking a workpiece (21) with a pattern comprising means (11) for generating a laser beam (L), a mask (18, 29) for defining the pattern, and control means (12 - 17, 19; 24 - 28, 33 - 38) for directing the laser beam (L) through the mask onto the workpiece and for causing the laser beam (L) to scan the workpiece to generate the pattern on the workpiece, characterized in that the mask has two discrete beam-transmitting regions (22, 23; 31, 32, 41) and in that the control means selects only one such region and generates the pattern by causing the laser beam to pass only through that selected region.

2. Optical apparatus according to claim 1, in which a first one of the regions (22, Fig. 1; 41, Fig. 10) defines a first pattern and a second one (23, 31, 32) of the regions is an opening which defines an optical beam cross-section, and in which the control means is operable selectively either in a raster-scan mode, in which the control means selects the first region and causes the laser beam to raster-scan the first pattern thereby to generate that pattern on the workpiece, or alternatively in a character mode, in which the control means selects the second region and causes the laser beam to pass through the said opening and, with the said optical beam cross-section, to scan the workpiece in accordance with a second pattern thereby to generate that pattern.

3. Optical apparatus according to claim 2, in which the control means is programmed to effect said first and second modes in a preset sequence whereby to generate a composite pattern comprising at least said first and second patterns.

4. Optical apparatus according to claim 2 or 3, characterized in that the first pattern is an etching on the said mask.

5. Optical apparatus according to claim 2, 3 or 4, characterized in that the said stop (23) is an opening in the said mask.

6. Optical apparatus according to claim 1, in which the mask (29, Fig. 8; 29A, Fig. 10) has a plurality of beam-transmitting regions each of which consists of a differently-shaped or differently-sized opening (31a - 31e, 32a - 32e) to define a unique optical beam cross-section, and in which the control means selects one of the regions appropriate to the pattern to be generated and causes the laser beam with the selected beam cross-section to scan the workpiece in accordance with that pattern to generate the pattern.

7. Optical apparatus according to claim 6, characterized in that said control means (33) includes a pair of mirrors (35, 37) for receiving the laser beam from the beam-transmitting region selected, and means (34, 36) for driving said pair of mirrors (35, 37).

8. Optical apparatus according to claim 6 or 7, characterized in that said plurality of beam-transmitting regions include circular, rectangular, pentagonal, and hexagonal beam shape-defining opening.

9. Optical apparatus according to claim 6, 7 or 8, in which the mask has a region which defines a pattern, and in which the control means is operable selectively either in a raster-scan mode, in which the control means selects the pattern-defining region and causes the laser beam to raster-scan that pattern thereby to generate that pattern on the workpiece, or alternatively in a character mode, in which the control means selects the region appropriate to the pattern to be generated and causes the laser beam with the selected beam shape to scan the workpiece in accordance with that pattern to generate that pattern.

10. Optical apparatus according to claim 9, characterized in that said control means (50a) controls optical means (123) to effect the raster-scan to generate the said pattern with a predetermined fixed size, and in which the control means is programmed to effect the raster-scan and character modes in a preset sequence.

11. Optical apparatus according to any preceding claim, characterized in that the control means comprises optical means (123) including a pair of mirrors (25, 27) for directing the laser beam onto the mask and means (24, 26) for driving said pair of mirrors (25, 27).

12. Optical apparatus according to any preceding claim, characterized in that said control means includes a relay lens (28) for directing the laser beam on to said mask (29).

13. Optical apparatus according to any preceding claim, characterised by an image forming lens (19) in the light path between the mask and the workpiece.

14. A method of marking a workpiece (21) with a pattern, comprising generating a laser beam, causing that laser beam to pass through a mask (18, 29) for defining the pattern, and controlling the laser beam to pass through the mask onto the workpiece and to scan the workpiece to generate the pattern on the workpiece, characterised in that the mask has two discrete beam-transmitting regions (22, 23; 31, 32, 41), and by selecting only one such region and generating the pattern by causing the laser beam to pass only through that selected region.

15. A method according to claim 14, in which a first one of the regions (22, Fig.1; 41, Fig 10) defines a first pattern and a second one (23, 31, 32) of the regions is an opening which defines an optical beam cross-section, the method including the step of selecting either a raster-scan mode of operation, in which the first region is selected and the laser beam is caused to raster-scan the first pattern thereby generating that pattern on the workpiece, or alternatively in a character mode of operation, in which the second region is selected and the laser beam is caused to pass through the said opening and, with the said optical beam cross-section, to scan the workpiece in accordance with a second pattern thereby to generate that pattern.

16. A method according to claim 14, in which the mask (29, Fig 8; 29A, Fig. 10) has a plurality of beam-transmitting regions each of which consists of a differently-shaped or differently-sized stop (31A to 31E, 32A to 32E) to define a unique optical beam cross-section, the method including the step of selecting one of the regions appropriate to the pattern to be generated and causing the laser beam with the selected beam cross-section to scan the workpiece in accordance with that pattern to generate the pattern.

## Patentansprüche

1. Optisches Gerät zur Markierung eines Werkstücks (21) mit einem Muster, das folgendes umfaßt: eine Einrichtung (11) zur Erzeugung eines Laserstrahls (L), eine Maske (18, 19) zur Definition des Musters und eine Steuereinrichtung (12 - 17, 19; 24 - 28, 33 - 38) zum Richten des Laserstrahls (L) durch die Maske auf das Werkstück und zur Veranlassung des Laserstrahls (L), das Werkstück abzutasten, um das Muster auf dem Werkstück zu erzeugen, dadurch gekennzeichnet, daß die Maske zwei diskrete Strahldurchlaßbereiche (22, 23; 31, 32, 41) hat, und die Steuereinrichtung nur einen solchen Bereich anwählt und das Muster erzeugt, indem sie den Laserstrahl veranlaßt, nur diesen gewählten Bereich zu durchstrahlen.

2. Optisches Gerät gemäß Anspruch 1, bei dem ein erster der Bereiche (22, Fig. 1; 41, Fig. 10) ein erstes Muster definiert und einer zweiter (23, 31, 32) der Bereiche eine Öffnung ist, welche einen optischen Strahlquerschnitt begrenzt, und bei dem die Steuereinrichtung selektiv entweder in einem Raster-Scan- bzw. Rasterabtast-Modus betrieben werden kann, in dem die Steuereinrichtung den ersten Bereich anwählt und den Laserstrahl veranlaßt, das erste Muster rastergeführt abzutasten, wodurch das Muster auf dem Werkstück erzeugt wird, oder wahlweise in einem Zeichenmodus, in dem die Steuereinrichtung den zweiten Bereich anwählt und den Laserstrahl veranlaßt, diese Öffnung zu durchstrahlen und mit dem optischen Strahlquerschnitt das Werkstück in Öbereinstimmung mit einem zweiten Muster abzutasten, um dieses Muster dadurch zu erzeugen.

3. Optisches Gerät gemäß Anspruch 2, bei dem die Steuereinrichtung so programmiert ist, daß der erste und zweite Modus in einer voreingestellten Abfolge ausgeführt werden, wodurch ein zusammengesetztes Muster erzeugt wird, das mindestens das erste und zweite Muster umfaßt.

4. Optisches Gerät gemäß Anspruch 2 oder 3, dadurch gekennzeichnet, daß das erste Muster durch Ätzen auf der Maske hergestellt ist.

5. Optisches Gerät gemäß Anspruch 2, 3 oder 4, dadurch gekennzeichnet, daß der Punkt (23) eine Öffnung in der Maske ist.

6. Optisches Gerät gemäß Anspruch 1, bei dem die Maske (29, Fig. 8; 29A, Fig. 10) eine Vielzahl von Strahldurchlaßbereichen aufweist, von denen jeder aus einer verschieden geformten oder verschieden großen Öffnung (31a - 31e, 32a - 32e) besteht, um einen eindeutigen optischen Strahlquerschnitt zu begrenzen, und bei dem die Steuereinrichtung einen der Bereiche entsprechend dem zu erzeugenden Muster anwählt und den Laserstrahl mit dem gewählten Strahlquerschnitt veranlaßt, das Werkstück entsprechend dem Muster abzutasten, um das Muster zu erzeugen.

7. Optisches Gerät gemäß Anspruch 6, dadurch gekennzeichnet, daß die Steuereinrichtung (33) ein Spiegelpaar (35, 37) zum Empfang des Laserstrahls vom gewählten Strahldurchlaßbereich sowie eine Einrichtung (34, 36) zur Steuerung dieses Spiegelpaars (35, 37) enthält.

8. Optisches Gerät gemäß Anspruch 6 oder 7, dadurch gekennzeichnet, daß die Vielzahl der Strahldurchlaßbereiche kreisförmige, rechteckige, fünfeckige und sechseckige strahlbegrenzende Öffnungen enthält.

9. Optisches Gerät gemäß Anspruch 6, 7 oder 8, bei dem die Maske einen Bereich hat, der ein Muster definiert und bei dem die Steuereinrichtung selektiv entweder in einem Raster-Scan- bzw. Rasterabtast-Modus betrieben werden kann, in dem die Steuereinrichtung den das Muster definierenden Bereich anwählt und den Laserstrahl veranlaßt, dieses Muster rastergeführt abzutasten, wodurch dieses Muster auf dem Werkstück erzeugt wird, oder wahlweise in einem Zeichenmodus, in dem die Steuereinrichtung den dem zu erzeugenden Muster entsprechenden Bereich anwählt und den Laserstrahl mit der gewählten Strahlform veranlaßt, das Werkstück in Übereinstimmung mit dem Muster abzutasten, um das Muster zu erzeugen.

10. Optisches Gerät gemäß Anspruch 9, dadurch gekennzeichnet, daß eine Steuereinrichtung (50a) eine optische Einrichtung (123) zur Ausführung der Rasterabtastung steuert, um das Muster mit einer vorgegebenen festen Größe zu erzeugen, und die Steuereinrichtung so programmiert ist, daß der Rasterabtast- und der Zeichenmodus in einer vorgegebenen Abfolge ausgeführt werden.

11. Optisches Gerät nach einem der vorstehenden Ansprüche, dadurch gekennzeichnet, daß die Steuereinrichtung eine ein Spiegelpaar (25, 27) enthaltende optische Einrichtung (123) zur Richtung des Laserstrahls auf die Maske sowie eine Einrichtung (24, 26) zur Steuerung des Spiegelpaars (25, 27) umfaßt.

12. Optisches Gerät nach einem der vorstehenden Ansprüche, dadurch gekennzeichnet, daß die Steuereinrichtung eine Übertragungslinse (28) zur Richtung des Laserstrahls auf die Maske (29) enthält.

13. Optisches Gerät nach einem der vorstehenden Ansprüche, dadurch gekennzeichnet, daß eine Abbildungslinse (19) im Lichtweg zwischen der Maske und dem Werkstück angeordnet ist.

14. Verfahren zur Markierung eines Werkstücks (21) mit einem Muster, welches folgende Schritte umfaßt: Erzeugung eines Laserstrahls, Veranlassung des Laserstrahls, eine Maske (18, 29) zur Definition des Musters zu durchstrahlen, und Steuerung des Laserstrahls durch die Maske auf das Werkstück zur Abtastung des Werkstücks, um das Muster auf dem Werkstück zu erzeugen, dadurch gekennzeichnet, daß die Maske zwei diskrete Strahldurchlaßbereiche (22, 23; 31, 32, 41) hat und die Steuereinrichtung nur einen solchen Bereich anwählt und das Muster erzeugt, indem sie den Laserstrahl veranlaßt, nur diesen gewählten Bereich zu durchstrahlen.

15. Verfahren gemäß Anspruch 14, bei dem ein erster der Bereiche (22, Fig. 1; 41, Fig. 10) ein erstes Muster definiert und einer zweiter (23, 31, 32) der Bereiche eine Öffnung ist, wobei das Verfahren den Schritt enthält, in dem entweder eine Raster-Scan- bzw. Rasterabtast-Betriebsart gewählt wird, in der der erste Bereich anwählt und der Laserstrahl veranlaßt wird, das erste Muster rastergeführt abzutasten, wodurch das Muster auf dem Werkstück erzeugt wird, oder wahlweise eine Zeichenbetriebsart, in der zweite Bereich anwählt und den Laserstrahl veranlaßt wird, diese Öffnung zu durchstrahlen und mit dem optischen Strahlquerschnitt das Werkstück in Übereinstimmung mit einem zweiten Muster abzutasten, um dieses Muster dadurch zu erzeugen.

16. Verfahren gemäß Anspruch 14, bei dem die Maske (29, Fig. 8; 29A, Fig. 10) eine Vielzahl von Strahldurchlaßbereichen aufweist, von denen jeder aus einer verschieden geformten oder verschieden großen Öffnung (31A bis 31E, 32A bis 32E) besteht, um einen eindeutigen optischen Strahlquerschnitt zu begrenzen, wobei das Verfahren den Schritt der Anwahl eines der Bereiche entsprechend dem zu erzeugenden Muster und der Veranlassung des Laserstrahls mit dem gewählten Strahlquerschnitt, das Werkstück entsprechend dem Muster abzutasten, um das Muster zu erzeugen, enthält.

## Revendications

1. Appareil optique destiné au marquage d'une pièce (21) avec un motif, comprenant un dispositif (11) destiné à créer un faisceau laser (L), un masque (18, 29) destiné à délimiter le motif, et un dispositif de commande (12-17, 19 ; 24-28, 33-38) destiné à diriger le faisceau laser (L) à travers le masque sur la pièce et à provoquer le balayage par le faisceau laser (L) de la pièce pour la création du motif sur la pièce, caractérisé en ce que le masque a deux régions séparées de transmission de faisceau (22, 23 ; 31, 32, 41), et en ce que le dispositif de commande ne sélectionne que l'une des régions et crée le motif en provoquant le passage du faisceau laser uniquement dans la région choisie.

2. Appareil optique selon la revendication 1, dans lequel une première des régions (22, figure 1 ; 41, figure 10) délimite un premier motif et une seconde (23, 31, 32) des régions est une ouverture qui délimite une section de faisceau optique, et dans lequel le dispositif de commande peut fonctionner sélectivement soit en mode à balayage par trame dans lequel le dispositif de commande sélectionne la première région et provoque le balayage par trame par le faisceau laser du premier motif avec création de ce motif sur la pièce, soit en mode caractère dans lequel le dispositif de commande sélectionne la seconde région et provoque le passage du faisceau laser par l'ouverture et, avec la section du faisceau optique, le balayage de la pièce suivant un second motif afin que celui-ci soit créé.

3. Appareil optique selon la revendication 2, dans lequel le dispositif de commande est programmé afin qu'il exécute le premier et le second mode avec une séquence préréglée de manière qu'il crée un motif composite comprenant au moins le premier et le second motif.

4. Appareil optique selon la revendication 2 ou 3, caractérisé en ce que le premier motif est formé par attaque chimique sur le masque.

5. Appareil optique selon la revendication 2, 3 ou 4, caractérisé en ce que le diaphragme (23) est une ouverture du masque.

6. Appareil optique selon la revendication 1, dans lequel le masque (29, figure 8 ; 29A, figure 10) a plusieurs régions de transmission de faisceau comprenant chacune une ouverture de configuration différente ou de dimension différente (31a-31e, 32a-32e) destinée à délimiter une section originale du faisceau optique, et dans lequel le dispositif de commande sélectionne l'une des régions convenant au motif à créer et provoque le balayage de la pièce par le faisceau laser ayant la section choisie en fonction de ce motif pour la création de celui-ci.

7. Appareil optique selon la revendication 6, caractérisé en ce que le dispositif de commande (33) comporte une paire de miroirs (35, 37) destinés à recevoir le faisceau laser de la région choisie de transmission de faisceau, et un dispositif (34, 36) de pilotage de la paire de miroirs (35, 37).

8. Appareil optique selon la revendication 6 ou 7, caractérisé en ce que les régions de transmission de faisceau comportent une ouverture délimitant une forme de faisceau circulaire, rectangulaire, pentagonal ou hexagonal.

9. Appareil optique selon la revendication 6, 7 ou 8, dans lequel le masque a une région qui délimite un motif, et dans lequel le dispositif de commande peut travailler sélectivement en mode de balayage par trame dans lequel le dispositif de commande sélectionne la région délimitant le motif et provoque un balayage par trame du faisceau laser sur ce motif avec création du motif sur la pièce, ou en mode de caractère dans lequel le dispositif de commande sélectionne la région convenant au motif à créer et provoque le balayage de la pièce par le faisceau laser avec la configuration choisie du faisceau d'après ce motif pour la création de ce motif.

10. Appareil optique selon la revendication 9, caractérisé en ce que le dispositif de commande (50a) commande un dispositif optique (123) destiné à assurer le balayage par trame pour la création du motif avec une dimension fixe prédéterminée, et dans lequel le dispositif de commande est programmé afin qu'il exécute le mode à balayage par trame et le mode caractère suivant une séquence préréglée.

11. Appareil optique selon l'une quelconque des revendications précédentes, caractérisé en ce que le dispositif de commande comporte un dispositif optique (123) comprenant deux miroirs (25, 27) destinés à diriger le faisceau laser sur le masque et un dispositif (24, 26) de pilotage de la paire de miroirs (25, 27).

12. Appareil optique selon l'une quelconque des revendications précédentes, caractérisé en ce que le dispositif de commande comporte une lentille relais (28) destinée à diriger le faisceau laser sur le masque (29).

13. Appareil optique selon l'une quelconque des revendications précédentes, caractérisé par une lentille (19) de formation d'image placée sur le trajet de la lumière entre le masque et la pièce.

14. Procédé de marquage d'une pièce (21) avec un motif, comprenant la création d'un faisceau laser, le passage du faisceau laser dans un masque (18, 29) destiné à délimiter le motif, et la commande du faisceau laser afin qu'il passe par le masque sur la pièce et balaye la pièce en créant le motif sur la pièce, caractérisé en ce que le masque a deux régions séparées (22, 23 ; 31, 32, 41) de transmission de faisceau, et par la sélection d'une seule région et par la création du motif par passage du faisceau laser uniquement dans la région choisie.

15. Procédé selon la revendication 14, dans lequel une première des régions (22, figure 1 ; 41, figure 10) délimite un premier motif et une seconde des régions (23, 31, 32) est une ouverture qui délimite une section du faisceau optique, le procédé comprenant une étape de sélection soit d'un mode de fonctionnement par balayage par trame dans lequel la première région est sélectionnée et le faisceau laser balaye le premier motif suivant une trame et crée ainsi ce motif sur la pièce, soit un mode caractère de fonctionnement dans lequel la seconde région est sélectionnée et le faisceau laser passe par l'ouverture et balaye la pièce avec un second motif, avec la section du faisceau optique, pour la création de ce motif.

16. Procédé selon la revendication 14, dans lequel le masque (29, figure 8 ; 29A, figure 10) a plusieurs régions de transmission de faisceau constituées chacune d'un diaphragme de configuration ou de dimension différente (31A à 31E, 32A à 32E) destiné à délimiter une section originale du faisceau optique, le procédé comprenant la sélection de l'une des régions convenant au motif à créer et le balayage de la pièce par le faisceau laser ayant la section choisie de faisceau en fonction du motif afin que celui-ci soit formé.
